Europäisches Patentamt

European Patent Office

Office européen des brevets

(19)

(11) Veröffentlichungsnummer: **0 151 431**
**B1**

(12) # EUROPÄISCHE PATENTSCHRIFT

(45) Veröffentlichungstag der Patentschrift:
07.06.89

(21) Anmeldenummer: 85100648.6

(22) Anmeldetag: 23.01.85

(51) Int. Cl.⁴: **F 24 H 1/10**, B 01 D 53/14

(54) Verfahren und Vorrichtung zur umweltfreundlichen Erhitzung einer Flüssigkeit.

(30) Priorität: 08.02.84 CH 627/84
19.04.84 CH 1960/84

(43) Veröffentlichungstag der Anmeldung:
14.08.85 Patentblatt 85/33

(45) Bekanntmachung des Hinweises auf die Patenterteilung: 07.06.89 Patentblatt 89/23

(84) Benannte Vertragsstaaten:
AT BE CH DE FR GB IT LI LU NL SE

(56) Entgegenhaltungen:
JP–A–55 087 514
US–A– 2 333 497
US–A– 2 878 644
US–A– 3 278 170
US–A– 3 438 722
US–A– 4 444 128

(73) Patentinhaber: **PULMATEC HOLDING INC**
**P.O. Box 2738, Zona 9A**
**Panama (PA)**

(72) Erfinder: **Dürrenberger, Willy**
**Augsterstrasse 21**
**CH-4133 Pratteln (CH)**

(74) Vertreter: **Braun, André et al**
**A. Braun, Braun, Héritier, Eschmann AG Patentanwälte Holbeinstrasse 36-38**
**CH-4051 Basel (CH)**

## Beschreibung

Die Erfindung betrifft ein Verfahren und eine Vorrichtung gemäss den ersten Teilen der Patentansprüche 1 und 8.

Alle Verfahren zur Erzeugung von Wärme aus flüssigen, festen oder gasförmigen Brennstoffen haben als Nachteil die Abgabe von Schadstoffen an die Umwelt. Diese Problematik führt zu unabsehbaren Verlusten und Schäden in der Natur. Diese Schäden sind allgemein bekannt und bedürfen keiner näheren Erläuterung.

Die US-A-3 568 658 beschreibt ein Wasserheizsystem, gemäss welchem innerhalb der Wasserfüllung eines Tanks ein zweiteiliges Flammrohr angeordnet ist. Ein Brenner ist so angeordnet, dass die Flamme zum Grossteil in die Wasserfüllung des Flammrohres eintaucht. Die somit in der Wasserfüllung des Flammrohres entstehenden Verbrennungsgase werden am Rohrunterteil mit dem Wasser abgepumpt und der Tankfüllung zugeführt. Derartige Anlagen sind einerseits relativ kompliziert, da das Flammrohr zweiteilig ausgeführt und ausserdem an ein Pumpsystem angeschlossen sein muss. Durch das Eintauchen der Flamme in die Wasserfüllung des Flammrohres ergibt sich ein beträchtlich geringerer Wirkungsgrad der Anlage, zumal die Wasserfüllung des Tanks hier in jeweils kleinen Mengen (Flammrohrfüllung) erhitzt werden kann. Die Schadstoffabsorbierung ist vernachlässigbar gering, da die Verweilzeit der Abgasbläschen in der Tankfüllung relativ kurz ist und keine Verwirbelung innerhalb der Tankfüllung erfolgt.

Gemäss der GB-A-759 062 soll die Flammentemperatur innerhalb eines ganz von Flüssigkeit umgebenen Flammrohres durch Einleitung von Kühlmittel und/oder chemischer Reagenzien gesteuert werden. Um lokale Ueberhitzung zu vermeiden, ist das Flammrohr von einem Kühlmantel umgeben, durch welchen kühles Gas in den Flammbereich eingeleitet wird, was sich insbesondere bei der Behandlung von Zuckerlösungen sowie zur Beeinflussung chemischer Reaktionen (Schwefeloxydation etc.) bewährt haben soll. Auch hier geht es nicht um die Absorbierung von Schadstoffen, sondern um die Oxydation von Chemikalien, wobei die Flammengase innerhalb der zu erwärmenden Flüssigkeit erzeugt und ohne Verwirbelung passiv durch die Tankfüllung geleitet werden.

Die US-A-2 333 497 beschreibt ein Verfahren bzw. eine Vorrichtung mit den Merkmalen des ersten Teils von Anspruch 1 bzw. 8. Die anmeldegemässe Vorrichtung, ein Niedertemperatur-Heizsystem, wurde erfunden, um eine möglichst schadstoffreie Gebäudeheizung bzw. optimal arbeitende Rauchgaswaschanlage zur Verfügung zu stellen. Unzweifelhaft besteht eine dringende Notwendigkeit, eine derartige Vorrichtung zu produzieren.

Im Gegensatz zu der in der US-A-2 333 497 beschriebenen Vorrichtung weisen das erfindungsgemässe Verfahren und die erfindungsgemässe Vorrichtung die folgenden Merkmale auf :

1. Die Flüssigkeit dient als Wärmespeicher ;

2. Die Heissgase werden in einer Brennkammer erzeugt, die ausserhalb der Flüssigkeit (W) liegt ;

3. Die Flüssigkeit enthält ein Absorptionsmittel.

Im Vergleich hierzu dient die Flüssigkeit beim Stand der Technik nicht als Wärmespeicher, da es sich um eine Vorrichtung zur Dampferzeugung handelt ; ferner enthält sie kein Absorptionsmittel und die Heissgase werden in einer Brennkammer erzeugt, die innerhalb der Flüssigkeit angeordnet ist.

Diese Unterschiede haben die nachstehend angeführten Konsequenzen :

1. Da bei der erfindungsgemässen Vorrichtung die Flüssigkeit als Wärmespeicher dienen muss, wird eine grosse Wärmekapazität benötigt. Gemäss Angaben in der US-A-2 333 497 gibt die Zeichnung die Grössenverhältnisse wieder. Die Brennkammer im Wasser setzt bei dieser Dimension die Wärmekapazität stark herab, was beim Stand der Technik notwendig, aber im Rahmen der vorliegenden Erfindung nicht brauchbar ist. Gleiches gilt für das Rohrstück, das von der Brennkammer bis zur Wasseroberfläche führt. Auch aus diesem Grund muss beim erfindungsgemässen System vorteilhafterweise die Brennkammer ausserhalb des Wärmespeichers, d. h. der Flüssigkeit (W), liegen.

2. Das saure Kondensat verbleibt in der Vorrichtung gemäss US-A-2 333 497 in der Brennkammer, d. h. das Kondensat, das sich besonders bei Temperaturen unterhalb 50 °C, d. h. beim Anfahren des Kessels, bildet, kann nicht ablaufen. Im Gegensatz hierzu läuft das saure Kondensat beim erfindungsgemässen System ab und wird im Kessel neutralisiert. Es ist bekannt, dass der Taupunkt von wasserhaltigem Rauchgas bei ca. 50 °C liegt, weshalb sich in beiden Vorrichtungen jeweils beim Anfahren des Kessels in der Brennkammer saures Kondensat bildet. Da beim Stand der Technik das saure Kondensat nicht abfliessen kann, kommt es zur Korrosion, und die Lebenszeit der aus der US-A-2 333 497 bekannten Vorrichtung ist aus diesem Grund erheblich kürzer im Vergleich zum anmeldegemässen System.

3. Die US-A-3 438 722 und US-A-4 444 128 offenbaren das gleiche Waschprinzip, wie es bis heute in der Heizungstechnik und Rauchgaswäsche vornehmlich verwendet wird. Man lässt das Gas « quasi kompakte Masse » einer feinverteilten basischen Flüssigkeit (Wassertropfen, pulverisiertes Alkali (Staub), geschmolzenes Alkali in Form von Tröpfchen etc.) entgegenströmen, während im erfindungsgemässen Heizsystem die bisher nicht verwendete umgekehrte Technologie angewandt wird. Im erfindungsgemässen System wird das Gas feinverteilt und in Bläschenform durch die kompakte Waschflüssigkeit gepresst. Wird beispielsweise als Absorptionsmittel Calciumcarbonat verwendet, so werden mehr als 99 % des

SO$_2$-Gases herausgewaschen.

Der vorliegenden Erfindung liegt die Aufgabe zugrunde, die Nachteile der bekannten Anlagen zu vermeiden und insbesondere ein die Absorption von Schadstoffen aus den heissen Gasen gewährleistendes Verfahren vorzuschlagen, das eine lange Verweilzeit der heissen Gase in der zu erwärmenden Flüssigkeit und damit einen besseren Wirkungsgrad erzielt, wobei die zur Durchführung dieses Verfahrens dienende Vorrichtung konstruktiv einfach und damit mit geringem Kostenaufwand erstellbar sein soll.

Das erfindungsgemässe Verfahren und die Vorrichtung sind in den Ansprüchen 1 und 8 definiert. In einer Ausführungsform der erfindungsgemässen Vorrichtung werden die Heissgase beispielsweise durch eine Brennerflamme erzeugt. Die Absorptionsflüssigkeit ist vorzugsweise Wasser, wobei dem Wasser Absorptionsmittel zugesetzt sein können.

Bevorzugte Absorptionsmittel sind Basen, insbesondere solche Basen wie z. B. Erdalkalihydroxide oder Alkalihydroxide oder Hydroxide dreiwertiger Metalle. Je nach Natur der Absorptionsflüssigkeit können als Neutralisationsmittel für die Schadstoffe, die in den Flammengasen enthalten sind, auch Salze in die Absorptionsflüssigkeit eingearbeitet werden. Mit Vorteil werden solche Salze verwendet, die eine Pufferwirkung entfalten, wie beispielsweise primäre, sekundäre oder tertiäre Alkalimetallphosphate. Besonders bevorzugte Salze sind Natrium-dihydrogenphosphat, Di-natrium-hydrogenphosphat, Tri-natriumphosphat oder Carbonate wie z. B. Calciumcarbonat oder Natriumcarbonat.

Entsprechend werden in Verbrennungsanlagen auch Schadstoffe basischer Natur entwickelt. Um diese zu absorbieren, werden der Absorptionsflüssigkeit vorteilhaft schwache Säuren zugesetzt.

Bevorzugte Säuren sind beispielsweise Phosphorsäure oder verdünnte Schwefelsäure. Das in die Absorptionsflüssigkeit eintauchende Rohr ist vorzugsweise isoliert, sodass praktisch keine Abwärme an die Umgebung abgegeben wird. Das Rohr ist vorzugsweise aus hitzebeständigem und korrosionsfestem Material. Die Formgebung des Rohres ist von untergeordneter Bedeutung, eine zylindrische Form ist jedoch bevorzugt.

Um eine optimale Einwirbelung der Flammengase in die Absorptionsflüssigkeit zu gewährleisten, können für die erfindungsgemässe Vorrichtung auch Homogenisatoren, Vibratoren oder Ultraschall an Stelle eines Rotors zur Verwendung gelangen. Wichtig ist, dass die Flammengase in Form von Bläschen in die Absorptionsflüssigkeit eingewirbelt werden, wobei in einer bevorzugten Ausführungsform möglichst kleine Bläschen für eine längere Verweilzeit und grössere für eine kürzere Verweilzeit in der Absorptionsflüssigkeit anzustreben sind. Dies, um einen optimalen Wärmeaustausch und eine maximale Schadstoffabsorption zu gewährleisten. Begasungsanlagen, die optimal in bezug auf Blasengrösse und Verweilzeit sind, sind in der Technik bekannt. Die Steuerung der Blasengrösse kann beispielsweise durch Einziehen eines Netzes reguliert werden. Eine weitere Möglichkeit für die Beeinflussung der Blasengrösse besteht im Zusetzen eines Netzmittels zur Absorptionsflüssigkeit, wobei letzteres in saurem Medium bevorzugt ist. In einer besonders bevorzugten Ausführungsform werden die heissen Flammengase mit einer genügend grossen Menge Absorptionsflüssigkeit vorgekühlt, vorzugsweise auf eine Temperatur, die unterhalb des Siedepunktes der Absorptionsflüssigkeit liegt, um das einzuwirbelnde Gasvolumen möglichst klein zu halten. Dies geschieht beispielsweise mit oberflächenvergrössernden Teilen, wie z. B. Raschigringen, die zwischen Flamme und Rotor angebracht sind. Daraus resultiert insgesamt ein niedrigerer Energiebedarf für den Rotor, beispielsweise für die zum Einwirbeln gewählte Vorrichtung.

Die Absorptionsflüssigkeit als Energieträger kann ihre Wärme an einen Sekundärenergieträger abgeben, was insbesondere für Raumheizung, Brauchwassererwärmung oder Wärmerückgewinnung bei Industrieabgasen von Bedeutung ist.

Die erfindungsgemässe Vorrichtung eignet sich für die Absorption von Flammengasen üblicher Temperaturen, bevorzugt ist jedoch der Niedertemperaturbereich. Im Niedertemperaturbereich sind die Stillstandverluste kleiner und beim Einsatz der erfindungsgemässen Vorrichtung praktisch vernachlässigbar.

Zusammenfassend kann gesagt werden, dass die erfindungsgemässe Vorrichtung eine schadstofffreie Verbrennung von flüssigen, verflüssigten und gasförmigen Brennmaterialien ermöglicht. Dies, unter optimalster Wärmeausnutzung und bei einem erheblich niedrigerem Brennstoffverbrauch, als dies bei bekannten Vorrichtungen der Fall ist, wobei die umweltfreundliche Entsorgung der Verbrennungsrückstände verbunden mit der Vermeidung einer Umweltbelastung als besondere Vorteile erwähnt werden müssen.

Neben der einfachen Bauart ist ein weiterer wesentlicher Vorteil in der Tatsache zu sehen, dass ein Kamin im herkömmlichen Sinne entfällt. Das erfindungsgemässe Verfahren wird zweckmässigerweise so durchgeführt, dass man Brennerflammengase üblicher Temperaturen, vorzugsweise zwischen 50 °C und 2 000 °C, besonders bevorzugt zwischen 800 °C und 1 500 °C, ganz besonders bevorzugt von 1 000 °C bis 1 500 °C, d. h. Flammengase und/oder Industrieabgase dieser Temperatur, durch ein Rohr mittels eines Homogenisators, Vibrators oder Rotors in Form von Bläschen in die Absorptionsflüssigkeit einwirbelt, wobei der Homogenisator, Vibrator oder Rotorpropeller so dimensioniert ist, dass im Rohr bei Betrieb der Vorrichtung ein leichter Unterdruck entsteht. In einer Ausführungsform des erfindungsgemässen Verfahrens wird zur Einwirbelung der Flammengase in die Absorptionsflüssigkeit, die Absorptionsflüssigkeit durch einen Rotor in Rotationsbewegung versetzt, mit dem Vorteil, dass dadurch eine längere Verweilzeit der spiralförmig aufsteigenden Bläschen erzielt und eine optimale Schadstoffabsorption erreicht wird.

Die erfindungsgemässe Vorrichtung wird nachstehend anhand der beiliegenden Zeichnung näher erläutert, wobei die Figuren lediglich zwei der möglichen Ausführungsformen näher beschreiben. Dem Fachmann sind weitere Ausführungsformen aufgrund des dargelegten Erfindungsgedankens geläufig; so zum Beispiel die Verwendung als Vorrichtung zur Wärmerückgewinnung mit gleichzeitiger Reinigung von Abgasen.

Fig. 1 ist eine schematische Schnittdarstellung einer solchen Vorrichtung und

Fig. 2 zeigt eine Ausführungsvariante, ebenfalls im Schnitt.

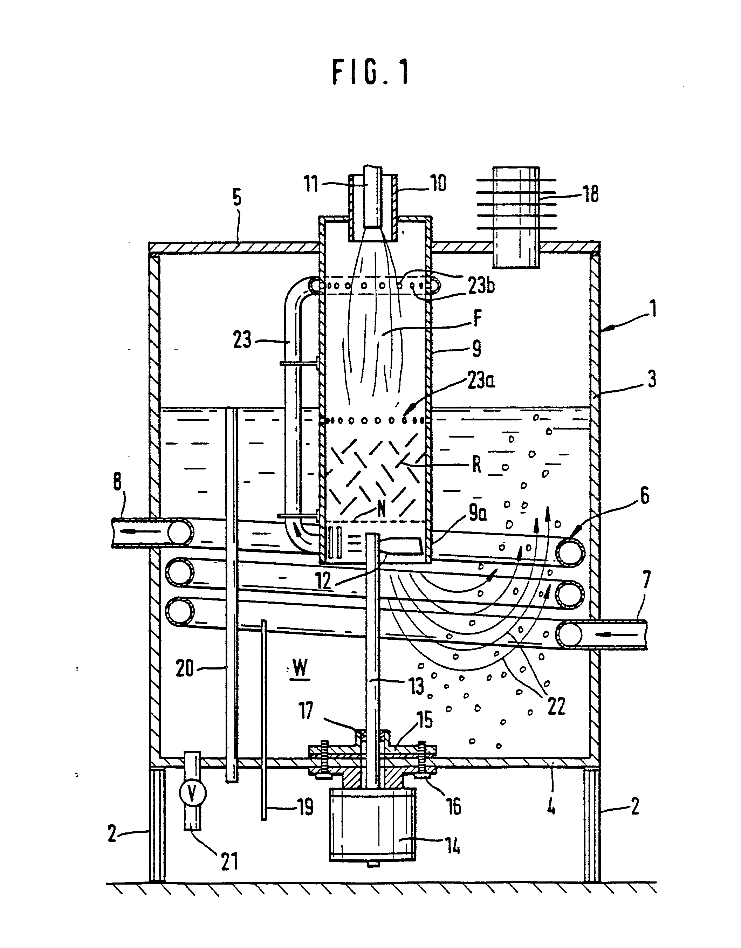

Gemäss der in Figur 1 dargestellten Ausführungsform weist die Vorrichtung ein flüssigkeitsdichtes Gehäuse 1 auf, das sich über Füsse 2 auf den Boden abstützt. Das Gehäuse 1 setzt sich aus einem kreiszylindrichen Mantel 3, einem Boden 4 und einem Deckel 5 zusammen. Es ist zum Teil mit einer Flüssigkeit, beispielsweise mit ein Absorptionsmittel enthaltendem Wasser W, gefüllt. Innerhalb der Wasserfüllung W befindet sich die Rohrschlange 6, die als Wärmetauscher dient und über einen Einlass 7 und Auslass 8 an einen Wärmeverbraucher, z. B. eine Heizanlage, angeschlossen ist. Das am Einlass 7 in die Rohrschlange 6 eintretende Medium heizt sich innerhalb der Rohrschlange 6 auf und gibt seine Wärme ausserhalb der Vorrichtung an den Wärmeverbraucher ab.

Im Deckel 5 des Gehäuses 1 ist ein zylindrisches Rohr 9 aufgehängt, in dessen Oberteil ein weiteres Rohr 10 kleineren Durchmessers mündet. In letzterem ist ein Brenner 11 angeordnet, der an ein bekanntes Brennersystem angeschlossen ist. Das Rohr 9, welches vorzugsweise aus rostfreiem Stahl hergestellt ist, ragt soweit nach unten ins Innere des Gehäuses 1, dass sein unterer Abschnitt 9a in die Wasserfüllung W eintaucht. Innerhalb dieses unteren Rohrabschnitts 9a ist ein Rotor 12 angeordnet, der sich somit innerhalb der Wasserfüllung W befindet und über die Antriebswelle 13 mit einem Motor 14 verbunden ist. Der Motor 14 ist über Flansche 15 und Schrauben 16 am Gehäuseboden 4 angeflanscht und die Welle 13 ist mittels einer flüssigkeitsdichten Dichtung 17 durch den Boden 4 hindurchgeführt.

Im Deckel 5 des Gehäuses 1 ist ferner ein Abluftkanal 18 angebracht. In die Wasserfüllung W ragen von unten ein Thermostat 19, ein Ueberlaufrohr 20. Am Gehäuseboden 4 ist ein Abschlämmventil 21 vorgesehen, das über eine Leitung mit einer Filteranlage verbunden ist.

Im Betrieb der beschriebenen Vorrichtung erzeugt der Brenner 11 innerhalb des Rohres 9 eine Flamme F, wobei Brennereinstellung und Rohrlänge so aufeinander abgestimmt sind, dass die Flamme das Wasserniveau nicht erreicht und auch von umherspritzenden Wasserteilchen nicht gestört wird.

Unter dem Einfluss des im Wasser umlaufenden Rotors 12 entsteht an der Grenzfläche zwischen dem Wasser und dem Rohrinnern ein Sog, durch welchen die im Rohr 9 entstehenden Verbrennungsgase ins Wasser eingesaugt und in Bläschenform in der Wasserfüllung W nach unten geschleudert werden, worauf sie in Richtung der Pfeile 22 langsam nach oben steigen. Dank dieser durch den Rotor 12 bewirkten Durchwirbelung der Verbrennungsgase im Wasser ergibt sich eine lange Verweilzeit und ferner grosse Kontaktflächen zwischen den Gasbläschen und dem umgebenden Wasser.

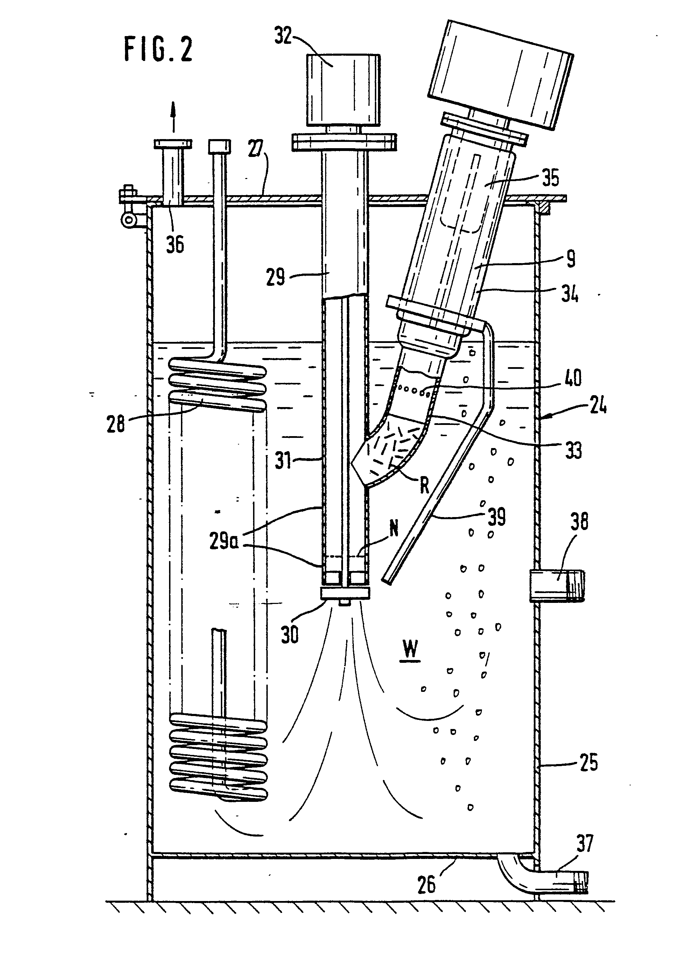

Eine Vorkühlung der Flammengase kann durch ein Rohr 23 (Fig. 1) bzw. 39 (Fig. 2) erzielt werden, das von der Nachbarschaft des Propellers 12 ausgehend aufsteigt und die Brennkammer 9 (Fig. 1) umgreift. Im umgreifenden Teil des Rohres 23 (Fig. 1) befinden sich kleine Oeffnungen 23b, so dass die Absorptionsflüssigkeit über die ganze Kammer fein verteilt wird, diese insgesamt ständig aussen benetzt und kühlt. Sobald der Propeller 12 läuft, steigt das Niveau der Absorptionsflüssigkeit mindestens bis zur Höhe der Bohrungen 23a (Fig. 1) bzw. 40 (Fig. 2) an und benetzt die oberflächenvergrössernden Teile R (Fig. 1 und 2), wodurch ein zusätzlicher Kühleffekt erzielt wird; eine Kühlung der Heissgase auf eine Temperatur, die unterhalb dem Siedepunkt der Absorptionsflüssigkeit liegt, sollte angestrebt werden.

In der durch die Fig. 2 illustrierten Ausführungsform mündet das vom Propeller aufsteigende Rohr 39 in einen Doppelmantel 34, wodurch eine Umspülung der Brennkammer 9 erzielt wird. Dieser Aspekt verhindert eine Ueberhitzung der in der Brennkammer 9 über dem Niveau der Absorptionsflüssigkeit stehenden Gase.

Die Benützung der oberflächenvergrösserenden Teile R (Raschigringe) erfolgt wie bei Fig. 1 beschrieben.

Figur 2 zeigt eine Variante dieser Vorrichtung. In einen Flüssigkeitstank 24 mit zylindrischem Mantel 25, Boden 26 und Deckel 27 ragt von oben eine Rohrschlange 28. Ein am unteren Ende eines Rohres 29 angeordneter Rotor 30 ist über eine Welle 31 mit einem Motor 32 gekoppelt. Ein Flammrohr 33 mündet schräg in das Rohr 29 und ist mit einer Brennkammer 9 verbunden, in welcher ein Brenner 35 angeordnet ist. Auch hier werden somit die aus dem Flammrohr 33 austretenden heissen Gase durch den Rotor 30 direkt in die Wasserfüllung W hineingesaugt und verwirbelt, worauf die im Kontakt mit dem Wasser bzw. Absorptionsmittel gereinigten Gase den Tank durch eine obere Oeffnung 36 verlassen. Die zu erwärmende Flüssigkeit tritt durch einen Einlass 37 in den Tank 24 ein und verlässt denselben durch einen Auslass 38. Ein Rohr 39 kann, ähnlich dem Rohr 23 aus Figur 1, zur Flammengaskühlung verwendet werden.

Um eine vollständige Verbrennung zu erreichen, sollte die Brennerflamme F die Absorptionsflüssigkeit W nicht berühren oder von hochwirbelnden Wassertropfen getroffen werden. Durch die starken Zentrifugalkräfte des Rotors 12 bzw. 30 in der Absorptionsflüssigkeit erreicht man eine höhere Verweilzeit der Bläschen und somit auch eine Reduzierung des Volumens der Absorptionsflüssigkeit W, bei gleichbleibendem gutem Wärmeaustausch und Schadstoffabsorption. Durch eine Dimensionsveränderung (Verengung) des Flammrohres 9 (Figur 1) und die Höhenverstellung des Rotors 12 bzw. 30 sowie durch die Tourenzahl des Rotors kann die Durchlaufmenge der Flammengase gesteuert werden.

Gemäss Figur 2 kann der untere, mit 29a bezeichnete Abschnitt des Rohres 29 funktionell als Verlängerung des Flammrohres 33 angesehen werden. Am unteren Ende dieses Abschnitts 29a, sowie gemäss Figur 1 im unteren Flammrohrabschnitt 9a, kann oberhalb oder unterhalb des Rotors 30 bzw. 12 ein Netz N angebracht sein, das die feinporige Verteilung der Verbrennungsgase in der Flüssigkeit begünstigt.

Anstelle eines Rotors 12 bzw. 30 liesse sich auch ein Homogenisator oder Vibrator bzw. ein anderes Organ verwenden, das in der Lage wäre, den gewünschten Sog und die erforderliche Verwirbelung zu erzielen.

Die in der Flüssigkeit enthaltenen Schadstoffe können auch elektrochemisch oder mittels stiller Entladung, d. h. durch Anordnung von Elektroden innerhalb der Flüssigkeit, oxidiert werden. Als Oxidationsmittel kann Ozon zur Verwendung gelangen.

Bei der Ausführungsform nach Figur 2 können im Uebergangsteil zwischen Brenner 35 und unterem Rohrabschnitt 29a oberflächenvergrössernde Teile, z. B. Raschigringe R, eingebaut sein.

Der Motor kann innerhalb der Flüssigkeit W angeordnet sein.

Bei der Verwendung der Vorrichtung als Rauchgaswäscher werden die heissen Rauchgase durch ein anstelle eines Brenners angeordnetes Rohr gegen die Flüssigkeit gerichtet und, wie beschrieben, in dieselbe eingesaugt und verwirbelt.

## Patentansprüche

1. Verfahren zur Erhitzung einer Flüssigkeit unter Vermeidung des Austretens von Schadstoffen an die Umgebung, wobei ausserhalb der Flüssigkeit eine Verbrennung stattfindet, die Verbrennungsgase unter Sogwirkung in die Flüssigkeit eingewirbelt werden und diese durchströmen, wodurch die Flüssigkeit aufgeheizt wird, dadurch gekennzeichnet, dass die mitgeführten Schadstoffe unter Mitwirkung eines Absorptionsmittels an die Flüssigkeit abgegeben werden.

2. Verfahren nach Anspruch 1, dadurch gekennzeichnet, dass die Heissgase in einer Brennerflamme erzeugt werden, die direkt auf die Oberfläche der Absorptionsflüssigkeit gerichtet wird, jedoch kurz oberhalb derselben endet.

3. Verfahren nach einem der Ansprüche 1 und 2, dadurch gekennzeichnet, dass die Flüssigkeit Wasser ist und als Absorptionsmittel eine Base enthält.

4. Verfahren nach einem der Ansprüche 1 bis 3, dadurch gekennzeichnet, dass das Wasser als Absorptionsmittel Salze enthält.

5. Verfahren nach Anspruch 4, dadurch gekennzeichnet, dass das Wasser als Salz Calciumcarbonat enthält.

6. Verfahren nach Anspruch 1, dadurch gekennzeichnet, dass in der Flüssigkeit enthaltene Schadstoffe elektrochemisch oder mittels stiller Entladung oxidiert werden.

7. Verfahren nach Anspruch 6, dadurch gekennzeichnet, dass als Oxidationsmittel Ozon zur Verwendung gelangt.

8. Vorrichtung zur Erhitzung einer Flüssigkeit unter Vermeidung des Austretens von Schadstoffen an die Umgebung, wobei die Flüssigkeit im direkten Kontakt mit Heissgasen erwärmt wird, mit einem eine Flüssigkeit (W) enthaltenden Tank (1, 24), einem innerhalb desselben angeordneten Heissgasrohr (9, 33) und einer am Tank (1) vorgesehenen Abströmöffnung (18, 36) für die Heissgase, wobei das Heissgasrohr (9, 33) mindestens mit seinem unteren Endabschnitt (9a) in die Flüssigkeit (W) eintaucht und im Eintrittsbereich der Heissgase in die Flüssigkeit, entweder im Heissgasrohr selbst oder in einer Verlängerung desselben, ein Organ (12, 30) angeordnet ist, das einerseits einen in die Flüssigkeit gerichteten Sog erzeugt und andererseits eine Durchwirbelung der Heissgase innerhalb der Flüssigkeit bewirkt, wobei die Erzeugung der Heissgase ausserhalb der Flüssigkeit (W) bewerkstelligt wird, dadurch gekennzeichnet, dass die Flüssigkeit (W) ein Absorptionsmittel enthält.

9. Vorrichtung nach Anspruch 8, dadurch gekennzeichnet, dass eine Brennkammer zur Erzeugung der Heissgase ausserhalb des Flüssigkeitsvolumens (W) angeordnet ist.

10. Vorrichtung nach Anspruch 8, dadurch gekennzeichnet, dass das Heissgasrohr als Flammrohr (9, 33) ausgebildet und demgemäss mit einem Brenner (11, 35) versehen ist und dass der Brenner (11, 35) unter Berücksichtigung der Flammrohrlänge so eingestellt ist, dass die entstehende Flamme oberhalb des Flüssigkeitsspiegels endet.

11. Vorrichtung nach Anspruch 8, dadurch gekennzeichnet, dass das genannte Organ ein Rotor (12, 30) ist.

12. Vorrichtung nach einem der Ansprüche 8 bis 11, dadurch gekennzeichnet, dass das Flammrohr (33) schräg von der Seite her in ein die Antriebswelle (31) des genannten Organs (30) umschliessendes Rohr mündet (Fig. 2).

13. Vorrichtung nach einem der Ansprüche 8 bis 12, dadurch gekennzeichnet, dass der Abstand der Brennerflamme von der Flüssigkeitsoberfläche 5-20 cm beträgt.

## Claims

1. Method of heating a liquid whilst avoiding the discharge of pollutants into the environment, wherein combustion takes place outside the liquid, the gases of combustion are turbulently drawn into the liquid by a suction effect and flow through this liquid, thereby heating the liquid, characterised in that the pollutants carried along are released into the liquid with the aid of an absorbant.

2. Method as claimed in claim 1, characterised in that the hot gases are produced in a burner flame which is aimed directly at the surface of the absorption liquid but comes to an end just above it.

3. Method as claimed in one of claims 1 and 2, characterised in that the liquids is water and contains a base as the absorbant.

4. Method as claimed in one of claims 1 to 3, characterised in that the water contains salts as the absorbant.

5. Method as claimed in claim 4, characterised in that the water contains calcium carbonate as the salt.

6. Method as claimed in claim 1, characterized in that any pollutants contained in the liquid are oxidised electrochemically or by static discharge.

7. Method as claimed in claim 6, characterised in that ozone is used as oxidising agent.

8. Apparatus for heating a liquid whilst avoiding the discharge of pollutants into the environment, wherein the liquid is heated in direct contact with hot gases comprising a tank (1, 24) containing a liquid (W), a hot gas pipe (9, 33) arranged inside the tank and an outflow opening (18, 36) for the hot gases provided on the tank (1), whilst the hot gas pipe (9, 33) has at least its lower end portion (9a) immersed in the liquid (W) and, mounted in the area of entry of the hot gases into the liquid, either in the hot gas pipe itself or on an extension thereof, is a member (12, 30) which on the one hand produces suction direction into the liquid and on the other hand causes turbulent movement of the hot gases within the liquid, the hot gases being produced outside the liquid (W), characterised in that the liquid (W) contains an absorbant.

9. Apparatus as claimed in claim 8, characterised in that a combustion chamber for producing the hot gases is arranged outside the volume of liquid (W).

10. Apparatus as claimed in claim 8, characterised in that the hot gas pipe is constructed as a flame pipe (9, 33) and is accordingly provided with a burner (11, 35) and in that the burner (11, 35) is adjusted, taking into account the length of the flame pipe, so that the flame formed ends above the level of the liquid.

11. Apparatus as claimed in claim 8, characterised in that the member is a rotor (12, 30).

12. Apparatus as claimed in one of claims 8 to 11, characterised in that the flame pipe (33) opens obliquely, from the side, into a pipe which surrounds the drive shaft (31) of said member (30) (Fig. 2).

13. Apparatus as claimed in one of claims 8 to 12, characterised in that the spacing of the burner flame from the surface of the liquid is 5-20 cm.

## Revendications

1. Procédé pour chauffer un liquide en évitant l'émission de substances polluantes dans l'environnement, selon lequel en dehors du liquide a lieu une combustion dont les gaz de combustion sont introduits avec effet de tourbillonnement, par aspiration, dans le liquide et le traversent, ce qui a pour résultat de chauffer le liquide, caractérisé en ce que les substances polluantes entraînées sont cédées au liquide avec le concours d'un agent d'absorption.

2. Procédé suivant la revendication 1, caractérisé en ce que les gaz chauds sont produits dans une flamme de brûleur qui est orientée directement sur la surface du liquide d'absorption, mais se termine à courte distance au-dessus de ce dernier.

3. Procédé suivant les revendications 1 et 2, caractérisé en ce que le liquide est de l'eau et contient une base à titre d'agent d'absorption.

4. Procédé suivant l'une quelconque des revendications 1 à 3, caractérisé en ce que l'eau contient des sels à titre d'agent d'absorption.

5. Procédé suivant la revendication 4, caractérisé en ce que l'eau contient du carbonate de calcium à titre de sel.

6. Procédé suivant la revendication 1, caractérisé en ce que les substances polluantes contenues dans le liquide sont oxydées électrochimiquement ou par effet de couronne.

7. Procédé suivant la revendication 6, caractérisé en ce qu'on utilise de l'ozone à titre d'agent d'oxydation.

8. Dispositif pour chauffer un liquide en évitant l'émission de substances polluantes dans l'environnement, le liquide étant chauffé en contact direct avec des gaz chauds, comportant un réservoir (1, 24) contenant un liquide (W), un conduit de gaz chauds (9, 33) disposé dans ce réservoir et un orifice d'évacuation (18, 36) pour les gaz chauds prévu sur le réservoir (1), le conduit de gaz chauds (9, 33) plongeant, par au moins sa section d'extrémité inférieure (9a), dans le liquide (W), et, dans la zone d'entrée des gaz chauds dans le liquide, c'est-à-dire dans le conduit de gaz chauds lui-même ou dans un prolongement de ce conduit, est disposé un organe (12, 30) qui, d'une part, produit une aspiration orientée dans le liquide et, d'autre part, provoque un brassage des gaz chauds à l'intérieur du liquide, la production des gaz chauds s'effectuant en dehors du liquide (W), caractérisé en ce que le liquide (W) contient un agent d'absorption.

9. Dispositif suivant la revendication 8, caractérisé en ce qu'une chambre de combustion destinée à produire les gaz chauds est prévue en dehors du volume de liquide (W).

10. Dispositif suivant la revendication 8, caractérisé en ce que le conduit de gaz chauds a la forme d'un tube-foyer (9, 33) et est pourvu, par conséquent, d'un brûleur (11, 35) et le brûleur (11, 35) est réglé compte tenu de la longueur du tube-foyer d'une manière telle que la flamme produite se termine au-dessus du niveau du liquide.

11. Dispositif suivant la revendication 8, caractérisé en ce que l'organe précité est un rotor (12, 30).

12. Dispositif suivant l'une quelconque des revendications 8 à 11, caractérisé en ce que le tube-foyer (33) s'ouvre obliquement et latéralement dans un tube entourant l'arbre d'entraînement (31) de l'organe (30) précité (Fig. 2).

13. Dispositif suivant l'une quelconque des revendications 8 à 12, caractérisé en ce que la distance séparant la flamme de brûleur de la surface du liquide est de 5 à 20 cm.

# FIG.1

# FIG. 2